# EUROPÄISCHE PATENTSCHRIFT

(11) **EP 2 796 680 B1**
(45) Veröffentlichungstag und Bekanntmachung des Hinweises auf die Patenterteilung: **25.05.2016**
(21) Anmeldenummer: 14152755.6
(22) Anmeldetag: 28.01.2014
(51) Int. Cl.: F01N 3/021, F01N 3/20, F01N 13/00

(54) **Abgasanlage einer Brennkraftmaschine**
Exhaust gas unit for a combustion engine
Installation de gaz d'échappement d'un moteur à combustion interne

(30) Priorität: 24.04.2013 DE 102013207450
(43) Veröffentlichungstag der Anmeldung: 29.10.2014
(73) Patentinhaber: Eberspächer Exhaust Technology GmbH & Co. KG, 66539 Neunkirchen (DE)
(72) Erfinder: Wirth, Georg, 73230 Kirchheim/Teck (DE); Neumann, Felix, 73773 Aichwald (DE)
(74) Vertreter: BRP Renaud & Partner mbB Rechtsanwälte Patentanwälte Steuerberater

(56) Entgegenhaltungen:
- EP-A1- 0 638 709
- EP-A1- 1 627 998
- EP-A1- 2 206 898
- WO-A1-03/071107

## Beschreibung

Die vorliegende Erfindung betrifft eine Abgasanlage für eine Brennkraftmaschine, insbesondere eines Kraftfahrzeugs.

Eine übliche Abgasanlage, die bei einer Brennkraftmaschine zum Abführen von Abgas von Brennräumen der Brennkraftmaschine dient, umfasst zumindest einen Abgasstrang, in dem ein Abgaspfad zum Führen von Abgas der Brennkraftmaschine verläuft. Im Abgasstrang kann eine Drosseleinrichtung zum Variieren eines durchströmbaren Querschnitts des Abgasstrangs angeordnet sein. Eine derartige Drosseleinrichtung kann beispielsweise dann sinnvoll sein, wenn für eine Abgasrückführung ein entsprechender Abgasgegendruck eingestellt werden soll. Ferner kann eine derartige Drosseleinrichtung bei geringem Abgasvolumenstrom eine Schalldämpfung der Abgasanlage verbessern.

Üblicherweise umfasst eine Drosseleinrichtung ein Drosselelement, das im Abgasstrang verstellbar angeordnet ist, um abhängig von einer Relativlage des Drosselelements bezüglich des Abgasstrangs den durchströmbaren Querschnitt zu verändern EP 1627998 A1 offenbart ein solches Drosselventil stromab eines Partikelfilters in Abgasstrang eines Verbrennungsmotors. Zum Antreiben des Drosselelements umfasst die Drosseleinrichtung regelmäßig einen Stellantrieb, beispielsweise in Form eines Elektromotors. Damit bei einem Versagen der Drosseleinrichtung, insbesondere des Stellantriebs, der Abgasstrang nicht durch das Drosselelement versperrt werden kann, ist eine Drosseleinrichtung üblicherweise auch mit einer Rückstellfeder ausgestattet, die so ausgelegt ist, dass sie bei einem Ausfall des Stellantriebs das Drosselelement für einen Notlaufbetrieb in eine Offenstellung antreiben und verstellen kann, die einen für den Notlaufbetrieb der Brennkraftmaschine ausreichenden Abgasvolumenstrom bei einem möglichst niedrigen Gegendruck ermöglicht. Für den Normalbetrieb der Drosseleinrichtung bedeutet dies jedoch, dass das Drosselelement mit Hilfe des Stellantriebs stets gegen die Rückstellfeder angetrieben und gehalten werden muss, um den durchströmbaren Querschnitt des Abgasstrangs bedarfsabhängig zu reduzieren. Dementsprechend ist für den Normalbetrieb stets ein erhöhter Energieverbrauch erforderlich, um die Drosseleinrichtung betätigen zu können. Des Weiteren ist auch eine derartige Rückstellfeder vergleichsweise aufwändig in der Montage sowie in der Herstellung, da sie für die gesamte konzipierte Lebensdauer der Abgasanlage bzw. der Drosseleinrichtung voll funktionsfähig sein muss.

Die vorliegende Erfindung beschäftigt sich mit dem Problem, für eine Abgasanlage der eingangs genannten Art eine verbesserte Ausführungsform anzugeben, die sich insbesondere durch reduzierte Herstellungskosten und/oder durch einen reduzierten Energieverbrauch auszeichnet.

Insbesondere beschäftigt sich die vorliegende Erfindung mit dem Problem, für eine derartige Abgasanlage eine Ausführungsform anzugeben, die bei einem Versagen der Drosseleinrichtung einen relativ zuverlässigen Notlaufbetrieb der Brennkraftmaschine ermöglicht.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die Abgasanlage bzw. den jeweiligen Abgasstrang mit einer Berstsicherung auszustatten. Die Berstsicherung ist im bzw. am Abgasstrang angeordnet und ist so ausgelegt, dass sie bei einem vorbestimmten Abgasmaximaldruck im Abgasstrang stromauf der Drosseleinrichtung einen Druckentlastungspfad öffnet. Falls also in einem Notfall die Drosseleinrichtung in ihrer Schließstellung verblocken sollte, führt ein daraus resultierender Druckanstieg im Abgasstrang stromauf der Drosseleinrichtung zu einem Bersten der Berstsicherung, sobald im Abgasstrang der Abgasmaximaldruck erreicht wird, für den die Berstsicherung ausgelegt ist. Durch das Bersten der Berstsicherung wird der Druckentlastungspfad geöffnet, so dass im Abgasstrang stromauf der Drosseleinrichtung der Abgasdruck absinken und dementsprechend Abgas über den Druckentlastungspfad abströmen kann. In der Folge wird ein Notlaufbetrieb für die Brennkraftmaschine ermöglicht, auch wenn die Drosseleinrichtung in ihrer Sperrstellung blockiert sein sollte. Die Verwendung einer derartigen Berst-Sicherung lässt sich vergleichsweise zuverlässig ein Notlaufbetrieb der Brennkraftmaschine bei einem Versagen der Drosseleinrichtung realisieren. Besonders vorteilhaft ist dabei, dass die Drosseleinrichtung keine Rückstellfeder benötigt, um den Notlaufbetrieb gewährleisten zu können. Dementsprechend ist es durch die vorgeschlagene Bauweise grundsätzlich möglich, auf eine derartige Rückstellfeder in der Drosseleinrichtung zu verzichten.

Entsprechend einer vorteilhaften Ausführungsform kann der Druckentlastungspfad einen stromauf der Drosseleinrichtung liegenden Anströmabschnitt des Abgasstrangs mit einer Umgebung der Abgasanlage fluidisch verbinden. Bei dieser besonders einfachen Ausführungsform wird somit für den Notfall das Abgas in die Umgebung der Abgasanlage entlassen, wenn die Berst-Sicherung anspricht. Diese Ausführungsform lässt sich besonders preiswert realisieren. Sofern die Berst-Sicherung stromauf eines Schalldämpfers angeordnet ist, kann für den Notlaufbetrieb eine damit einhergehende erhöhte Schallemission in Kauf genommen werden. Sofern die Berst-Sicherung stromauf einer Abgasreinigungseinrichtung der Abgasanlage angeordnet ist, kann für den Notlaufbetrieb eine erhöhte Schadstoffemission in Kauf genommen werden.

Zweckmäßig ist der Druckentlastungspfad fluidisch mit einem Anströmabschnitt des Abgasstrangs verbunden, der sich bezüglich einer Abgasströmungsrichtung stromauf der Drosseleinrichtung befindet. Sofern der Druckentlastungspfad in eine Umgebung der Abgasanlage führt, ist die Berstsicherung zweckmäßig stromauf der Drosseleinrichtung im Abgasstrang angeordnet. Jedenfalls ist die Berstsicherung bezüglich einer Abgasströmung im Abgasstrang parallel zur Drosseleinrichtung angeordnet.

Bei einer anderen vorteilhaften Ausführungsform kann die Berstsicherung in eine den Abgaspfad von einer Umgebung der Abgasanlage trennende Wand des Abgasstrangs eingebaut sein. Auch hierdurch erfolgt die Druckentlastung beim Bersten der Berstsicherung in die Umgebung der Abgasanlage. Gleichzeitig zeichnet sich diese Ausführungsform durch einen extrem preiswerten Aufbau aus. Ferner ist diese Bauweise extrem raumsparend.

Eine andere Ausführungsform zeichnet sich dadurch aus, dass die Berstsicherung in einem Rohrstutzen angeordnet ist, der an eine den Abgaspfad von einer Umgebung der Abgasanlage trennende Wand des Abgasstrangs fluidisch angeschlossen ist. Sofern der Rohrstutzen zur Umgebung der Abgasanlage hin offen ist, führt auch hier der Druckentlastungspfad in diese Umgebung. Die Unterbringung der Berstsicherung im Rohrstutzen kann jedoch die Montage der Berstsicherung sowie einen Austausch der Berstsicherung vereinfachen.

Entsprechend einer anderen Ausführungsform kann der Druckentlastungspfad durch einen die Drosseleinrichtung umgehenden Drosselbypass des Abgasstrangs führen. Bei dieser Bauweise wird erreicht, dass bei blockierter Drosseleinrichtung und bei ansprechender Berstsicherung die Druckentlastung innerhalb des Abgasstrangs erfolgen kann, ohne dass dabei Abgas in die Umgebung der Abgasanlage entlassen wird. Hierzu folgt der Abgasstrom dem Drosselbypass, so dass er innerhalb des Abgasstrangs die Drosseleinrichtung umgeht. Auf diese Weise wird auch für den Notfall gewährleistet, dass keine überhöhte Schallemission und/oder Schadstoffemission erfolgt.

Entsprechend einer vorteilhaften Weiterbildung kann der Drosselbypass durch ein Bypassrohr gebildet sein, das einen stromauf der Drosseleinrichtung liegenden Anströmabschnitt des Abgasstrangs mit einem stromab der Drosseleinrichtung liegenden Abströmabschnitt des Abgasstrangs fluidisch verbindet. Durch diese Maßnahme baut auch diese Ausführungsform mit Drosselbypass vergleichsweise preiswert. Insbesondere lassen sich ein Einlassabschnitt des Bypassrohrs und ein Auslassabschnitt des Bypassrohrs einfach an den Abgasstrang fluidisch anschließen.

Gemäß einer vorteilhaften Weiterbildung kann die Berstsicherung an einem dem Anströmabschnitt zugewandten Einlassabschnitt des Bypassrohrs oder an einem dem Abströmabschnitt zugewandten Auslassabschnitt des Bypassrohrs oder zwischen dem Einlassabschnitt und dem Auslassabschnitt angeordnet sein. Somit ist grundsätzlich jede beliebige Position innerhalb des Bypassrohrs für die Anordnung der Berstsicherung geeignet. Bevorzugt ist jedoch eine Anordnung der Berst-Sicherung zwischen Einlassabschnitt und Auslassabschnitt, da sich dann die Montage der Berstsicherung bzw. ein Austausch der Berstsicherung vereinfacht.

Entsprechend einer anderen Ausführungsform kann die Berstsicherung ein beim Abgasmaximaldruck berstendes Berstelement aufweisen. Hierdurch lässt sich die Berstsicherungsfunktion auf ein einzelnes bzw. einziges Bauteil, nämlich das Berstelement konzentrieren, das außerdem einen geometrisch und strukturell einfachen Aufbau aufweisen kann. Ferner lässt sich ein derartiges Beistellelement auf einen vorbestimmten Berstdruck relativ genau auslegen.

Gemäß einer Weiterbildung kann die Berstsicherung eine den Druckentlastungspfad umschließende Halterung zum dichten Halten des Berstelements aufweisen. Insbesondere kann das Berstelement dadurch austauschbar an bzw. in der Halterung angeordnet werden. Somit lässt sich eine ausgelöste Berstsicherung einfach durch Austauschen des Berstelements erneuern.

Gemäß einer anderen Weiterbildung kann die Halterung als Flanschverbindung ausgestaltet sein, in die das Berstelement eingebunden ist. In diesem Fall besteht die Halterung somit aus zwei zueinander komplementären Flanschen, die axial aneinander befestigt werden, wobei das Berstelement axial zwischen beide Flansche eingespannt wird. Derartige Flanschverbindungen lassen sich besonders einfach hinreichend dicht ausgestalten und ermöglichen ohne Weiteres die erforderlichen Haltekräfte für das Berstelement.

Zweckmäßig kann es sich beim Berstelement um eine Berstscheibe handeln, also um ein flaches Berstelement mit rundem Umfang. Insbesondere kann die Berstscheibe kreisförmig konfiguriert sein. Zweckmäßig besitzt das Berstelement eine Sollbruchstruktur, die beispielsweise mittels Sicken oder mittels einer Gravur oder mittels Einprägungen realisiert sein kann. Das Berstelement kann zweckmäßig aus Edelstahl hergestellt sein.

Die Drosseleinrichtung weist ein im Abgaspfad angeordnetes Drosselelement und einen außerhalb des Abgaspfads angeordneten Drosselantrieb zum Verstellen des Drosselelements auf. Ferner wird vorgeschlagen, dass die Drosseleinrichtung keine Rückstellfeder aufweist, die bei ausgefallenem Drosselantrieb das Drosselelement von einer Betriebsstellung in eine Notbetriebsstellung überführt, wobei das Drosselelement in der Notbetriebsstellung eine kleinere Drosselwirkung erzeugt als in der Betriebsstellung. Bei dieser Ausführungsform wird ein wesentlicher Vorteil der Berstsicherung genutzt, indem auf die Rückstellfeder in der Drosseleinrichtung verzichtet wird. Somit reduzieren sich die Kosten für die Drosseleinrichtung signifikant, da sowohl eine teure Rückstellfeder als auch die Montage der Rückstellfedern entfallen.

Entsprechend einer vorteilhaften Ausführungsform kann die Berstsicherung bezüglich der Abgasströmungsrichtung stromab eines im Abgasstrang angeordneten Partikelfilters angeordnet sein, bei dem es sich bevorzugt um einen Dieselpartikelfilter handelt. Hierdurch ist gewährleistet, dass auch für den Fall, dass der Druckentlastungspfad in die Umgebung der Abgasanlage führt, hinreichend gereinigtes Abgas in die Umgebung gelangt, wenn die Berstsicherung anspricht. Ferner wird erreicht, dass ein Druckabfall im Abgasstrang, der sich bis zu einem Auslass des Partikelfilters einstellt, für die Berstsicherung unbeachtlich ist.

Entsprechend einer anderen vorteilhaften Ausführungsform kann die Berstsicherung bezüglich der Abgasströmungsrichtung stromab eines im Abgasstrang angeordneten SCR-Katalysators angeordnet sein. SCR steht dabei für Selective Catalytic Reduction. SCR-Katalysatoren dienen in der Regel zur Reduzierung von Stickoxiden mit Hilfe eines Additivs. Die Positionierung der Berstsicherung stromab eines derartigen SCR-Katalysators gewährleistet zum einen, dass bei ansprechender Berstsicherung nur gereinigtes Abgas dem Druckentlastungspfad folgen kann, so dass es unproblematisch ist, den Druckentlastungspfad in die Umgebung der Abgasanlage zu führen. Zum anderen wird durch die Anordnung der Berst-Sicherung stromab des SCR-Katalysators erreicht, dass die Berstsicherung einen Druckabfall im Abgasstrang bis zu einem Austritt des SCR-Katalysators nicht berücksichtigen muss.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine stark vereinfachte Prinzipdarstellung einer Abgasanlage,
- Fig. 2: eine Ansicht wie in Fig. 1, jedoch bei einer anderen Ausführungsform,
- Fig. 3: eine Detailansicht einer derartigen Abgasanlage im Bereich einer Drosseleinrichtung, jedoch bei einer weiteren Ausführungsform,
- Fig. 4: einen Längsschnitt einer Berstsicherung der Abgasanlage.

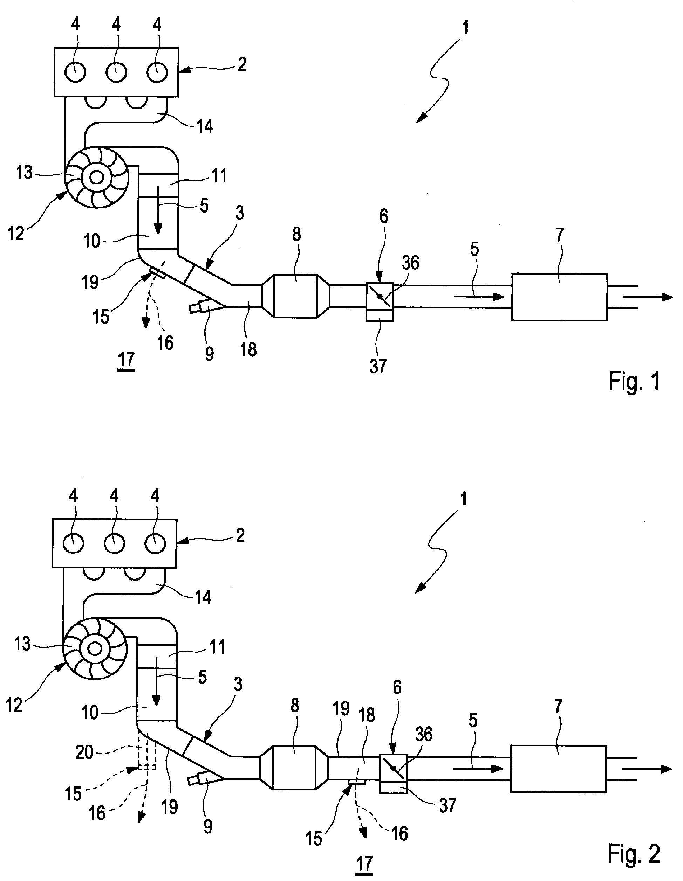

Entsprechend den Figuren 1 und 2 umfasst eine Abgasanlage 1 einer Brennkraftmaschine 2 zumindest einen Abgasstrang 3 zum Abführen von Abgas von Brennräumen 4 der Brennkraftmaschine 2. Bei einer einflutigen Abgasanlage 1 ist nur ein solcher Abgasstrang 3 vorgesehen. Bei einer zweiflutigen Abgasanlage 1 sind zwei derartige Abgasstränge 3 vorgesehen. Im Abgasstrang 3 verläuft ein Abgaspfad 5, der im Betrieb der Brennkraftmaschine 2 das Abgas bzw. einen Abgasstrom führt.

Im Abgasstrang 3 ist eine Drosseleinrichtung 6 angeordnet, mit deren Hilfe ein durchströmbarer Querschnitt des Abgasstrangs 3 variiert werden kann. Die Drosseleinrichtung 6 ist hier bezüglich einer Abgasströmungsrichtung zwischen einem Schalldämpfer 7 und einem SCR-Katalysator 8 im Abgasstrang 3 angeordnet. Stromauf des SCR-Katalysators 8 ist ein Injektor 9 zum Einbringen eines Reduktionsmittels in den Abgasstrom angeordnet. Beim Reduktionsmittel handelt es sich üblicherweise um eine wässrige Harnstofflösung. Durch Einbringen der wässrigen Harnstofflösung in den heißen Abgasstrom erfolgt zunächst eine Aufspaltung des Harnstoffs mittels Thermolyse in Ammoniak und Isocyansäure. Anschließend erfolgt eine Aufspaltung der Isocyansäure in Verbindung mit dem Wasser der wässrigen Harnstofflösung mittels Hydrolyse in Ammoniak und Kohlendioxid. Die Thermolyse und die Hydrolyse können insbesondere durch einen Eintrittsbereich des SCR-Katalysators 8 unterstützt werden. Im SCR-Katalysator 8 erfolgt dann eine Reduktion von Stickoxiden des Abgases mit Ammoniak zu Stickstoff und Wasser.

Die hier gezeigte Abgasanlage 1 enthält im Abgasstrang 3 stromauf des Injektors 9 außerdem einen Partikelfilter 10, bei dem es sich bevorzugt um einen Dieselpartikelfilter handelt. Stromauf des Partikelfilters 10 ist ferner ein Oxidationskatalysator 11 angeordnet.

Die Brennkraftmaschine 2 ist hier als aufgeladene Brennkraftmaschine 2 konzipiert, wobei zur Aufladung ein Abgasturbolader 12 vorgesehen ist. Eine Turbine 13 des Abgasturboladers 12 ist in üblicher Weise zwischen einem Abgassammler 14 und dem Oxidationskatalysator 11 im Abgasstrang 3 angeordnet. Der Abgassammler 14, der üblicherweise auch als "Abgaskrümmer" bezeichnet wird, bildet den Einlassbereich des Abgasstrangs 3 und ist unmittelbar an die Brennkraftmaschine 2 angeschlossen.

Die hier vorgestellte Abgasanlage 1 ist außerdem mit wenigstens einer Berstsicherung 15 ausgestattet, die gemäß den Ausführungsformen der Fig. 1 und 2 im oder am Abgasstrang 3 stromauf der Drosseleinrichtung 6 angeordnet sein kann. Die Berstsicherung 15 ist so ausgelegt, dass sie bei einem vorbestimmten Abgasmaximaldruck, der sich im Abgasstrang 3 stromauf der Drosseleinrichtung 6 aufbauen kann, einen Druckentlastungspfad 16 öffnet. Der Druckentlastungspfad 16 ist in den Figuren 1 bis 4 durch einen Pfeil symbolisiert, der mit unterbrochener Linie dargestellt ist.

Bei den Ausführungsformen der Figuren 1 und 2 ist der Druckentlastungspfad 16 so geführt, dass er beim Ansprechen der Berstsicherung 15, also beim Bersten der Berstsicherung 15 in eine Umgebung 17 der Abgasanlage 1 führt. Dementsprechend ist der Druckentlastungspfad 16 so angeordnet, dass er einen stromauf der Drosseleinrichtung 6 liegenden Anströmabschnitt 18 des Abgasstrangs 3 mit der Umgebung 17 der Abgasanlage 1 fluidisch verbindet.

Bei den Ausführungsformen der Figuren 1 und 2 ist die Berstsicherung 15 in eine Wand 19 des Abgasstrangs 3 eingebaut, die den Abgaspfad 5 von der Umgebung 17 trennt. Diese Bauform ist besonders raumsparend. Entsprechend einer alternativen Ausführungsform, die in Figur 2 mit unterbrochener Linie angedeutet ist, kann die Berstsicherung 15 an oder in einem Rohrstutzen 20 angeordnet sein, der an die Wand 19 des Abgasstrangs 3 angebaut ist, derart, dass der Rohrstutzen 20 fluidisch mit dem Abgasstrang 3 verbunden ist. Erkennbar benötigt diese Bauform mehr Bauraum. Allerdings vereinfacht sich dadurch die Montage der Berstsicherung 15.

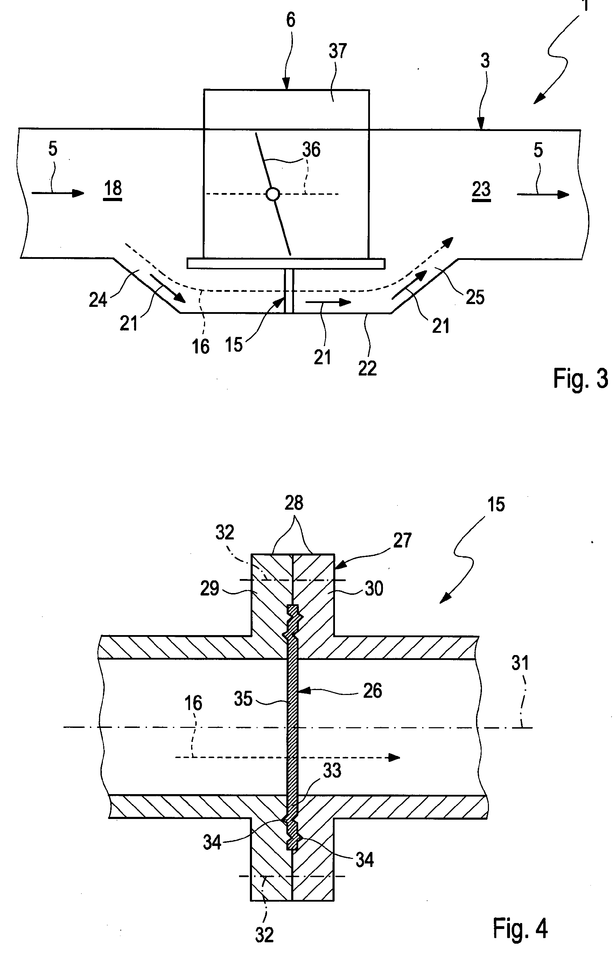

Bei der in Figur 3 gezeigten Ausführungsform führt der Druckentlastungspfad 16 durch einen Drosselbypass 21, der die Drosseleinrichtung 6 umgeht und der in Figur 3 durch Pfeile angedeutet ist. Zweckmäßig ist der Drosselbypass 21 durch ein Bypassrohr 22 gebildet, das den stromauf der Drosseleinrichtung 6 liegenden Anströmabschnitt 18 des Abgasstrangs 3 mit einem stromab der Drosseleinrichtung 6 liegenden Abströmabschnitt 23 des Abgasstrangs 3 fluidisch verbindet. Zweckmäßig ist die Berstsicherung 15 dabei zwischen einem dem Anströmabschnitt 18 zugewandten Einlassabschnitt 24 des Bypassrohrs 22 und einem dem Abströmabschnitt 23 zugewandten Auslassabschnitt 25 des Bypassrohrs 22 angeordnet.

Bei der in Figur 1 gezeigten Ausführungsform ist die Berstsicherung 15 zwischen dem Partikelfilter 10 und dem SCR-Katalysator 8 angeordnet. Bei der in Figur 2 gezeigten Ausführungsform ist die Berstsicherung 15 zwischen dem SCR-Katalysator 8 und der Drosseleinrichtung 6 angeordnet.

Entsprechend den Figuren 1 bis 3 umfasst die Drosseleinrichtung 6 ein im Abgaspfad 5 angeordnetes Drosselelement 36, das hier jeweils als Klappe, insbesondere als Schmetterlingsklappe, angedeutet ist. Die Drosseleinrichtung 6 ist ferner mit einem außerhalb des Abgaspfads 5 angeordneten Drosselantrieb 37 ausgestattet, mit dessen Hilfe das Drosselelement 36 verstellbar ist. Beispielsweise handelt es sich beim Drosselantrieb 37 um einen Elektromotor. Eine Rückstellfeder, die bei herkömmlichen Drosseleinrichtungen 6 das Drosselelement 36 von einer in den Figuren 1 bis 3 mit durchgezogener Linie gezeigten Betriebsstellung in eine in Figur 3 mit unterbrochener Linie angedeutete Notbetriebsstellung überführt, ist bei der hier gezeigten Drosseleinrichtung 6 nicht erforderlich und vorzugsweise auch nicht vorhanden. Die Notbetriebsstellung charakterisiert sich dadurch, dass sie eine gegenüber der Betriebsstellung reduzierte Drosselwirkung erzeugt und insbesondere einen Notbetrieb der Brennkraftmaschine 2 bei einem Ausfall der Drosseleinrichtung 6 ermöglicht. Fehlt eine derartige Rückstellfeder, kann ein Blockieren der Drosseleinrichtung 6 in einer Betriebsstellung mit starker Drosselwirkung des Drosselelements 36 im Anströmabschnitt 18 zu einem hohen Druckanstieg führen. Erreicht der Druck im Anströmabschnitt 18 den Abgasmaximaldruck, für den die Berstsicherung 15 ausgelegt ist, kommt es zum Bersten der Berstsicherung 15 bzw. zum Bersten, also zur Zerstörung des Berstelements 26. Hierdurch wird der Druckentlastungspfad 16 geöffnet, so dass eine für den Notbetrieb der Brennkraftmaschine 2 ausreichende Abgasströmung möglich ist.

Die nachfolgend mit Bezug auf Figur 4 beschriebene bevorzugte Ausführungsform einer derartigen Berst-Sicherung 15 ist grundsätzlich bei allen der vorstehend genannten Ausführungsformen der Figuren 1 bis 3 realisierbar. Denkbar sind grundsätzlich auch andere Ausführungsformen für eine derartige Berstsicherung 15.

Entsprechend Figur 4 umfasst die Berstsicherung 15 ein Berstelement 26, das so ausgelegt ist, dass es beim vorbestimmten Abgasmaximaldruck birst. Das Berstelement 26 ist hier als scheibenförmiges, flaches Element konfiguriert, also als Berstscheibe ausgelegt. Das Berstelement 26 kann eine runde, insbesondere kreisförmige, Außenkontur besitzen. Ferner kann das Berstelement 26 eine hier nicht erkennbare Sollbruchstruktur aufweisen.

Die Berstsicherung 15 weist außerdem eine Halterung 27 auf, die den Druckentlastungspfad 16 umschließt und die zum dichten Halten des Berstelements 26 ausgestaltet ist. Im Beispiel der Figur 4 ist die Halterung 27 als Flanschverbindung 28 ausgestaltet, bei der zwei Flansche 29, 30 bezüglich einer Längsmittelachse 31 axial aneinander befestigt werden. Entsprechende Befestigungsstellen, bei denen es sich bevorzugt um Schraubverbindungen handelt, sind durch strichpunktierte Linien angedeutet und mit 32 bezeichnet. In diese Flanschverbindung 28 ist das Berstelement 26 eingebunden. Dies erfolgt zweckmäßig so, dass das Berstelement 26 axial zwischen die beiden Flansche 29, 30 angeordnet wird und axial zwischen den beiden Flanschen 29, 30 verspannt wird. Hierzu greift ein außenliegender Randabschnitt 33 des Berstelements 26 radial in die Flanschverbindung 28 ein.

Im Beispiel der Figur 4 weist das Berstelement 26 in seinem Randabschnitt 33 außerdem zumindest eine Axialdichtung 34 auf. Im Beispiel der Figur 4 sind zwei derartige Axialdichtungen 34 wiedergegeben, die jeweils durch eine in der Umfangsrichtung geschlossen umlaufende Sicke gebildet sind. Mit Hilfe dieser Dichtungen 34 kann die Flanschverbindung 28 besonders einfach hinreichend abgedichtet werden. Durch die Integration der jeweiligen Dichtung 34 in das Berstelement 26 erhält das Berstelement 26 eine Zusatzfunktion. Außerdem kann auf eine separate Axialdichtung zwischen den beiden Flanschen 29, 30 verzichtet werden. Die zuvor genannte Berststruktur ist am Berstelement 26 vorzugsweise ausschließlich innerhalb eines vom Randbereich 33 umschlossenen Zentralbereichs 35 des Berstelements 26 ausgebildet.

## Patentansprüche

1. Abgasanlage für eine Brennkraftmaschine (2), insbesondere eines Kraftfahrzeugs,
- mit wenigstens einem Abgasstrang (3), in dem ein Abgaspfad (5) zum Führen von Abgas der Brennkraftmaschine (2) verläuft,
- mit einer in dem Abgasstrang (3) angeordneten Drosseleinrichtung (6) zum Variieren eines durchströmbaren Querschnitts des Abgasstrangs (3),
- wobei die Drosseleinrichtung (6) ein im Abgaspfad (5) angeordnetes Drosselelement (36) und einen außerhalb des Abgaspfads (5) angeordneten Drosselantrieb (37) zum Verstellen des Drosselelements (36) aufweist,
**gekennzeichnet durch** wenigstens eine im oder am Abgasstrang (3) angeordnete Berstsicherung (15), die bei einem vorbestimmten Abgasmaximaldruck in einem stromauf der Drosseleinrichtung (6) liegenden Anströmabschnitt (18) des Abgasstrangs (3) einen fluidisch mit dem Anströmabschnitt (18) verbundenen Druckentlastungspfad (16) öffnet, um bei einem Versagen der Drosseleinrichtung (6) einen Notlaufbetrieb der Brennkraftmaschine (2) zu ermöglichen.

2. Abgasanlage nach Anspruch 1,
**dadurch gekennzeichnet,**
**dass** der Druckentlastungspfad (16) den Anströmabschnitt (18) des Abgasstrangs (3) mit einer Umgebung (17) der Abgasanlage (1) fluidisch verbindet.

3. Abgasanlage nach Anspruch 1 oder 2,
**dadurch gekennzeichnet,**
**dass** die Berstsicherung (15) in eine den Abgaspfad (5) von einer Umgebung (17) der Abgasanlage (1) trennende Wand (19) des Abgasstrangs (3) eingebaut ist.

4. Abgasanlage nach Anspruch 1 oder 2,
**dadurch gekennzeichnet,**
**dass** die Berstsicherung (15) in einem Rohrstutzen (20) angeordnet ist, der an eine den Abgaspfad (5) von der Umgebung (17) der Abgasanlage (1) trennende Wand des Abgasstrangs (3) fluidisch angeschlossen ist.

5. Abgasanlage nach Anspruch 1,
**dadurch gekennzeichnet,**
**dass** der Druckentlastungspfad (16) durch einen die Drosseleinrichtung (6) umgehenden Drosselbypass (21) des Abgasstrangs (3) führt.

6. Abgasanlage nach Anspruch 5,
**dadurch gekennzeichnet,**
**dass** der Drosselbypass (21) durch ein Bypassrohr (22) gebildet ist, das den Anströmabschnitt (18) des Abgasstrangs (3) mit einem stromab der Drosseleinrichtung (6) liegenden Abströmabschnitt (23) des Abgasstrangs (3) fluidisch verbindet.

7. Abgasanlage nach Anspruch 6,
**dadurch gekennzeichnet,**
**dass** die Berstsicherung (15) an einem dem Anströmabschnitt (18) zugewandten Einlassabschnitt (24) des Bypassrohrs (22) oder an einem dem Abströmabschnitt (23) zugewandten Auslassabschnitt (25) des Bypassrohrs (22) oder zwischen dem Einlassabschnitt (24) und dem Auslassabschnitt (25) angeordnet ist.

8. Abgasanlage nach einem der Ansprüche 1 bis 7,
**dadurch gekennzeichnet,**
**dass** die Berstsicherung (15) ein beim Abgasmaximaldruck berstendes Berstelement (26) aufweist.

9. Abgasanlage nach Anspruch 8,
**dadurch gekennzeichnet,**
**dass** die Berstsicherung (15) eine den Druckentlastungspfad (16) umschließende Halterung (27) zum dichten Halten des Berstelements (26) aufweist.

10. Abgasanlage nach Anspruch 9,
**dadurch gekennzeichnet,**
**dass** die Halterung (27) als Flanschverbindung (28) ausgestaltet ist, in die das Berstelement (26) eingebunden ist.

11. Abgasanlage nach einem der Ansprüche 8 bis 10,
**dadurch gekennzeichnet,**
**dass** das Berstelement (26) als Berstscheibe ausgestaltet ist.

12. Abgasanlage nach einem der Ansprüche 1 bis 11,
**dadurch gekennzeichnet,**
**dass** keine Rückstellfeder vorgesehen ist, die bei ausgefallenem Drosselantrieb (37) das Drosselelement (36) von einer Betriebsstellung in eine Notbetriebsstellung überführt, wobei das Drosselelement (36) in der Notbetriebsstellung eine kleinere Drosselwirkung erzeugt als in der Betriebsstellung.

13. Abgasanlage nach einem der Ansprüche 1 bis 12,
**dadurch gekennzeichnet,**
**dass** die Berstsicherung (15) stromab eines im Abgasstrang (3) angeordneten Partikelfilters (10) angeordnet ist.

14. Abgasanlage nach einem der Ansprüche 1 bis 13,
**dadurch gekennzeichnet,**
**dass** die Berstsicherung (15) stromab eines im Abgasstrang (3) angeordneten SCR-Katalysators (8) angeordnet ist.

## Claims

1. Exhaust system for an internal combustion engine (2), in particular of a motor vehicle,
- having at least one exhaust tract (3), in which an exhaust gas path (5) runs for conducting the exhaust gas of the internal combustion engine (2),
- and having a throttle device (6) arranged in the exhaust tract (3) to vary a flow cross-section of the exhaust tract (3),
- wherein the throttle device (6) has a throttle element (36) arranged in the exhaust gas path (5) and a throttle drive (37) arranged outside of the exhaust gas path (5) for adjustment of the throttle element (36),
**characterised by** at least one bursting protection (15) arranged in or on the exhaust tract (3), which, at a predetermined maximum exhaust gas pressure in an inflow section (18) of the exhaust tract (3) upstream of the throttle device (6), opens a pressure relief path (16) fluidically connected with the inflow section (18), to enable emergency operation of the internal combustion engine (2) in the event of a malfunction of the throttle device (6).

2. Exhaust system according to claim 1, **characterised in that** the pressure relief path (16) fluidically connects the inflow section (18) of the exhaust tract (3) with an environment (17) of the exhaust system (1).

3. Exhaust system according to claim 1 or 2, **characterised in that** the bursting protection (15) is installed in a wall (19) of the exhaust gas tract (3) dividing the exhaust gas path (5) from an environment (17) of the exhaust system (1).

4. Exhaust system according to claim 1 or 2, **characterised in that** the bursting protection (15) is arranged in a pipe socket (20) which is fluidically mounted on a wall of the exhaust tract (3) dividing the exhaust gas path (5) from the environment (17) of the exhaust system (1).

5. Exhaust system according to claim 1, **characterised in that** the pressure relief path (16) runs around the throttle device (6) through a throttle by-pass (21) of the exhaust tract (3).

6. Exhaust system according to claim 5, **characterised in that** the throttle by-pass (21) is formed by a bypass pipe (22), which fluidically connects the inflow section (18) of the exhaust tract (3) with an outflow section (23) of the exhaust tract (3) downstream of the throttle device (6).

7. Exhaust system according to claim 6, **characterised in that** the bursting protection (15) is arranged on an inlet section (24) of the by-pass pipe facing the inflow section (18), or on an outlet section (25) of the by-pass pipe (22) facing the outflow section (23), or between the inlet section (24) and the outlet section (25).

8. Exhaust system according to one of claims 1 to 7, **characterised in that** the bursting protection (15) has a bursting element (26) which bursts at the maximum exhaust gas pressure.

9. Exhaust system according to claim 8, **characterised in that** the bursting protection (15) has a mounting bracket (27) embracing the pressure relief path (16) for mounting the bursting element (26) in a sealed manner.

10. Exhaust system according to claim 9, **characterised in that** the mounting bracket (27) is configured as a flange connection (28) in which the bursting element (26) is integrated.

11. Exhaust system according to one of claims 8 to 10, **characterised in that** the bursting element (26) is configured as a bursting disc.

12. Exhaust system according to one of claims 1 to 11, **characterised in that** no return spring is provided, which on failure of the throttle drive (37) transfers the throttle element (36) from an operating position into an emergency operation position, wherein the throttle element (36) achieves a smaller throttling effect in the emergency operation position than in the operating position.

13. Exhaust system according to one of claims 1 to 12, **characterised in that** the bursting protection (15) is arranged downstream of a particle filter (10) arranged in the exhaust tract (3).

14. Exhaust system according to one of claims 1 to 13, **characterised in that** the bursting protection (15) is arranged downstream of an SCR catalytic converter (8) arranged in the exhaust tract (3).

## Revendications

1. Installation de gaz d'échappement pour un moteur à combustion interne (2), en particulier d'un véhicule automobile,
- avec au moins un brin de gaz d'échappement (3), dans lequel une voie de gaz d'échappement (5) s'étend pour le guidage des gaz d'échappement du moteur à combustion interne (2),
- avec un dispositif d'étranglement (6) agencé dans le brin de gaz d'échappement (3) pour la variation d'une section transversale pouvant être traversée du brin de gaz d'échappement (3),
- le dispositif d'étranglement (6) présentant un élément d'étranglement (36) agencé dans la voie de gaz d'échappement (5) et un entraînement d'étranglement (37) agencé en dehors de la voie de gaz d'échappement (5) pour le réglage de l'élément d'étranglement (36),
**caractérisée par** au moins une protection anti-éclatement (15) agencée dans ou sur le brin de gaz d'échappement (3) qui ouvre, en cas de pression maximale de gaz d'échappement prédéterminée dans une section d'afflux (18) se trouvant en amont du dispositif d'étranglement (6) du brin de gaz d'échappement (3), une voie de décompression (16) reliée fluidiquement à la section d'afflux (18) afin de permettre en cas de défaillance du dispositif d'étranglement (6), un fonctionnement d'urgence du moteur à combustion interne (2).

2. Installation de gaz d'échappement selon la revendication 1,
**caractérisée en ce que**
la voie de décompression (16) relie fluidiquement la section d'afflux (18) du brin de gaz d'échappement (3) à un environnement (17) de l'installation de gaz d'échappement (1).

3. Installation de gaz d'échappement selon la revendication 1 ou 2,
**caractérisée en ce que**
la protection anti-éclatement (15) est intégrée dans une paroi (19), séparant la voie de gaz d'échappement (5) d'un environnement (17) de l'installation de gaz d'échappement (1), du brin de gaz d'échappement (3).

4. Installation de gaz d'échappement selon la revendication 1 ou 2,
**caractérisée en ce que**
la protection anti-éclatement (15) est agencée dans une tubulure (20) qui est raccordée fluidiquement à une paroi, séparant la voie de gaz d'échappement (5) de l'environnement (17) de l'installation de gaz d'échappement (1), du brin de gaz d'échappement (3).

5. Installation de gaz d'échappement selon la revendication 1,
**caractérisée en ce que**
la voie de décompression (16) passe par une dérivation d'étranglement (21) contournant le dispositif d'étranglement (6) du brin de gaz d'échappement (3).

6. Installation de gaz d'échappement selon la revendication 5,
**caractérisée en ce que**
la dérivation d'étranglement (21) est formée par un tube de dérivation (22) qui relie fluidiquement la section d'afflux (18) du brin de gaz d'échappement (3) à une section d'écoulement (23), se trouvant en aval du dispositif d'étranglement (6), du brin de gaz d'échappement (3).

7. Installation de gaz d'échappement selon la revendication 6,
**caractérisée en ce que**
la protection anti-éclatement (15) est agencée sur une section d'entrée (24) tournée vers la section d'afflux (18) du tube de dérivation (22) ou sur une section de sortie (25) tournée vers la section d'écoulement (23) du tube de dérivation (22) ou entre la section d'entrée (24) et la section de sortie (25).

8. Installation de gaz d'échappement selon l'une quelconque des revendications 1 à 7,
**caractérisée en ce que**
la protection anti-éclatement (15) présente un élément d'éclatement (26) éclatant en cas de pression maximale de gaz d'échappement.

9. Installation de gaz d'échappement selon la revendication 8,
**caractérisée en ce que**
la protection anti-éclatement (15) présente un support (27) entourant la voie de décompression (16) pour le maintien étanche de l'élément d'éclatement (26).

10. Installation de gaz d'échappement selon la revendication 9,
**caractérisée en ce que**
le support (27) est configuré en tant que liaison bridée (28), dans laquelle l'élément d'éclatement (26) est intégré.

11. Installation de gaz d'échappement selon l'une quelconque des revendications 8 à 10,
**caractérisée en ce que**
l'élément d'éclatement (26) est configuré en tant que disque d'éclatement.

12. Installation de gaz d'échappement selon l'une quelconque des revendications 1 à 11,
**caractérisée en ce que**
aucun ressort de rappel n'est prévu, lequel transfère, en cas d'entraînement d'étranglement en panne (37), l'élément d'étranglement (36) d'une position de fonctionnement à une position de fonctionnement d'urgence, l'élément d'étranglement (36) générant dans la position de fonctionnement d'urgence une action d'étranglement plus petite que dans la position de fonctionnement.

13. Installation de gaz d'échappement selon l'une quelconque des revendications 1 à 12,
**caractérisée en ce que**
la protection anti-éclatement (15) est agencée en aval d'un filtre à particules (10) agencé dans le brin de gaz d'échappement (3).

14. Installation de gaz d'échappement selon l'une quelconque des revendications 1 à 13,
**caractérisée en ce que**
la protection anti-éclatement (15) est agencée en aval d'un catalyseur SCR (8) agencé dans le brin de gaz d'échappement (3).
